# EUROPÄISCHE PATENTANMELDUNG

(11) **EP 1 021 051 A1**
(43) Veröffentlichungstag der Anmeldung: **19.07.2000**
(21) Anmeldenummer: 99100455.7
(22) Anmeldetag: 11.01.1999
(51) Int. Cl.: H04Q 3/00, H04Q 3/545

(54) **Informationselement-Komponente einer Signalisierungs-Nachricht**

(71) Anmelder: SIEMENS AKTIENGESELLSCHAFT, 80333 München (DE)
(72) Erfinder: Stademann, Rainer, 85658 Egmating (DE)

(57) **Zusammenfassung**

Der Erfindung liegt die Aufgabe zugrunde, es einem Betreiber zu ermöglichen, neue Dienste und/oder Leistungsmerkmale in sein Netz einbringen zu können, ohne daß diese durch den Hersteller der Vermittlungsstellen bereits im Software-System der Vermittlungsstellen vorgeleistet sein müssen.
Diese Aufgabe wird durch ein Informationselement einer Signalisierungsnachricht gelöst, das derart ausgebildet ist, daß die Festlegung, für welche Dienste bzw. Leistungsmerkmale es verwendet wird, während des Betriebs mittels einer entsprechenden Administrations-Komponente durchgeführt werden kann.

## Beschreibung

In heutigen Kommunikationsnetzen, wie z.B. dem Telefonnetz, können viele (verbindungsbezogene) Dienste bzw. Leistungsmerkmale nur durch einen aufwendigen Wechsel der Software in den Vermittlungsstellen (APS-Wechsel) eingebracht werden. Dieses ist vielfach unter anderem dadurch begründet, daß Dienste und Leistungsmerkmale eine Veränderung der Signalisierung zwischen den Vermittlungstellen (Zwischenamtssignalisierung) erfordern. Diese Änderung umfaßt die Erweiterung von existierenden Informationelementen, die Einführung neuer Informationselemente oder gar neuer Nachrichten. Weil jedoch die Zuordnung eines Informationselemente einer Signalisierungsnachricht zu einem oder mehren Diensten bzw. Leistungsmerkmalen über das APS festgelegt ist, kann die genannte Änderung nicht ohne einen APS-Wechsel bewirkt werden.

Eine bisherige Lösung für die Einbringung bestimmter neuer Leistungsmerkmale in ein Netz (ohne einen Wechsel der APS in den VST) ist die Verwendung der IN (Intelligent Network)-Architektur. Für viele Leistungsmerkmale ist eine IN-Lösung jedoch nicht möglich oder zu teuer.

Der vorliegenden Erfindung liegt die Aufgabe zugrunde, es einem Betreiber zu ermöglichen, neue Dienste und/oder Leistungsmerkmale ins Netz einbringen zu können, ohne daß diese durch den Hersteller der Vermittlungsstellen bereits im APS vorgeleistet sein müssen.

Diese Aufgabe wird durch eine Informationselement-Komponente gemäß Anspruch 1 bzw. ein Verfahren gemäß Anspruch 3 gelöst.

Im folgenden wird ein Ausführungsbeispiel der Erfindung anhand der Zeichnung näher erläutert, wobei die Zeichnung fünf Figuren umfaßt.

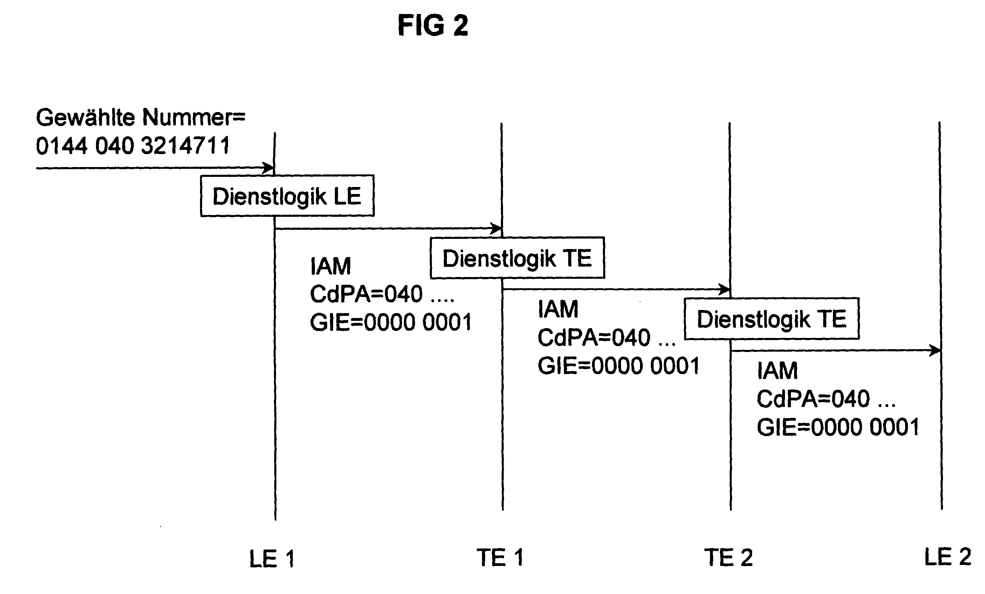

Die Erfindung sieht die Einführung eines oder mehrerer generischer Informationelemente in (Signalisierungs-) Nachrichten der Zwischenamtssignalisierung vor, die bei der Verbindungssteuerung zwischen den Vermittlungsstellen eines Kommunikationsnetzes ausgetauscht werden. Die funktionale Bedeutung eines generischen Informationselements (GIE) ist durch das APS nicht festgelegt. Hierdurch unterscheiden sich GIE von den üblichen nicht-generischen Informationselementen. Zum Beispiel kann ein generisches Informationselement (GIE) in der Verbindungsaufbaunachricht IAM des ISUP hierfür vorgesehen werden (siehe FIG.2). Beispielsweise kann ein solches GIE aus einer (Bit-)Leiste von 8, 16, 24 oder mehr Bits bestehen.

Auf- und Abbau von Verbindungen wird in einer Vermittlungsstelle durch das Softwareprogramm der Verbindungssteuerung (Teil des APS) kontrolliert. Damit der Betreiber ohne Wechsel des APS neue Leistungsmerkmale und/oder Dienste in das Netz einbringen kann, werden neben den GIE folgende Funktionen zur Bearbeitung und Auswertung der GIE und zur Beeinflussung der Verbindungssteuerung in den Vermittlungsstellen des Netzes vorgesehen:
a) eine Schreibfunktion, mit der Information in die GIE von verbindungsbezogenen Nachrichten eingeschrieben werden können (z.B. Setzen einzelner Bits in einer Bitleiste)
b) eine Lesefunktion, mit der gezielt Information aus den GIE von verbindungsbezogenen Nachrichten ausgelesen werden können (z.B. Prüfen einzelner Bits in einer Bitleiste)
c) eine Administrations-Komponente, über die der Netz-Betreiber die Verbindungssteuerung einer VST beeinflussen kann. Über diese Administrations-Komponente können in die Verbindungssteuerung durch den Netzbetreiber an vorgegebenen Stellen (sogenannten points in call, z.B. vor oder nach der Ziffernanalyse der Zielrufnummer) sogenannte Manipulatorfunktionen eingebettet werden. Eine Manipulatorfunktion besteht aus einem Bedingungsteil und einem Aktionsteil.

Zum Beispiel erlaubt der Bedingungsteil mit Hilfe der Lesefunktion b) das Prüfen der Inhalte der GIE auf vorgebene Werte. Beispielsweise könnte geprüft werden, ob ein bestimmtes Bit (z.B. Bit #1) im GIE einer empfangenen verbindungsbezogenen Nachricht (z.B. IAM des ISUP) gesetzt ist. Darüberhinaus können im Bedingungsteil Zustände der Vermittlungsstelle oder Zustände der Verbindung geprüft werden. Beispielsweise könnte geprüft werden, ob der Rufursprung national oder international ist.

Der Aktionsteil einer Manipulatorfunktion wird durch das APS der Vermittlungsstelle ausgeführt, falls die im Bedingungsteil vorgegebene Bedingung erfüllt ist. Der Aktionsteil kann optional selbst wieder vollständige Manipulatorfunktionen enthalten (Verschachtelung). Mit Hilfe des Aktionsteils können Zustände der Verbindung und/oder Zustände der Vermittlungsstelle verändert werden. Damit beeinflußt der Aktionsteil die Verbindungssteuerung. Der Aktionsteil wird ebenso wie der Bedingungsteil administrativ durch den Netzbetreiber festgelegt.

Ein Beispiel für eine spezielle Aktion ist das Aktivieren obiger Schreibfunktion a) für ein GIE mit vorgegebener Information. Eine andere Aktion kann z.B. das Auslösen der Verbindung sein.

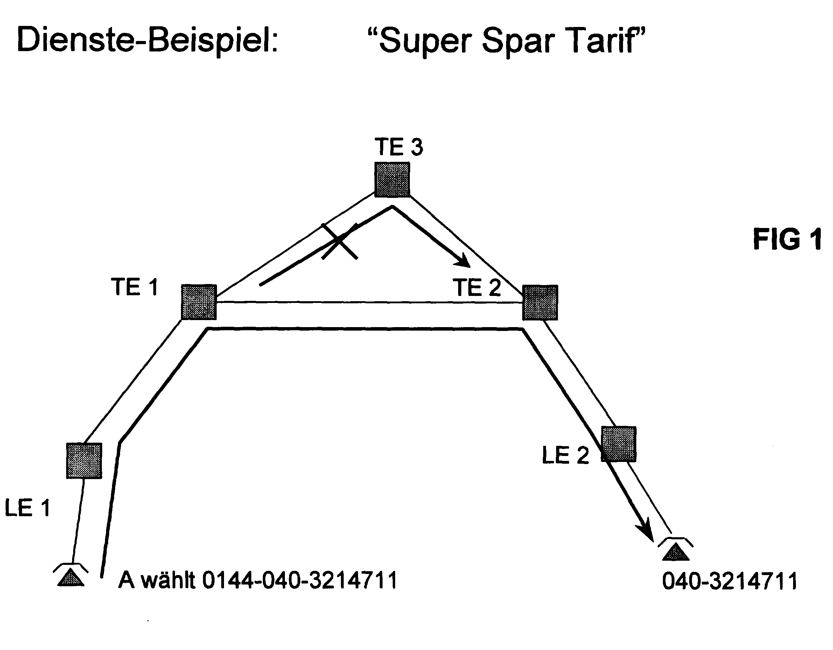

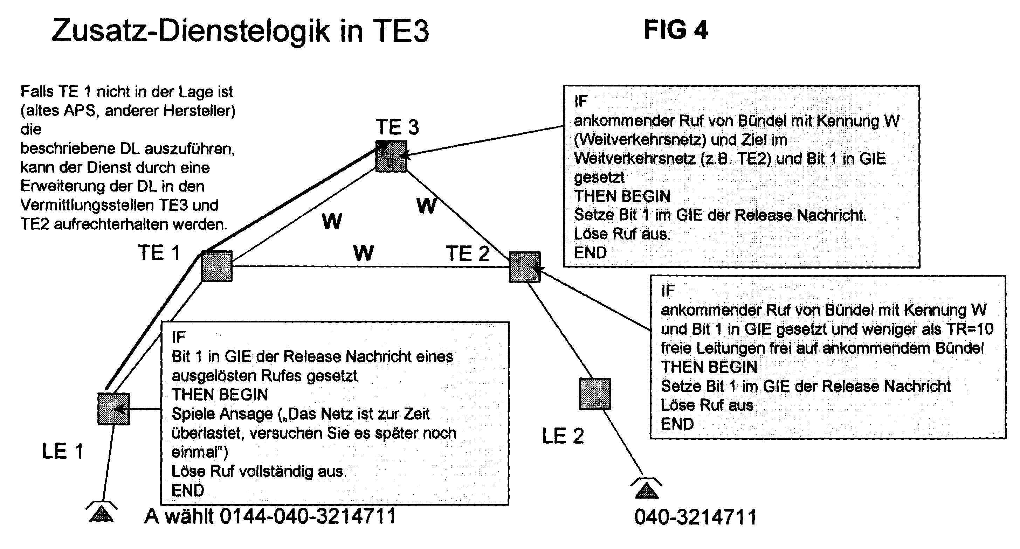

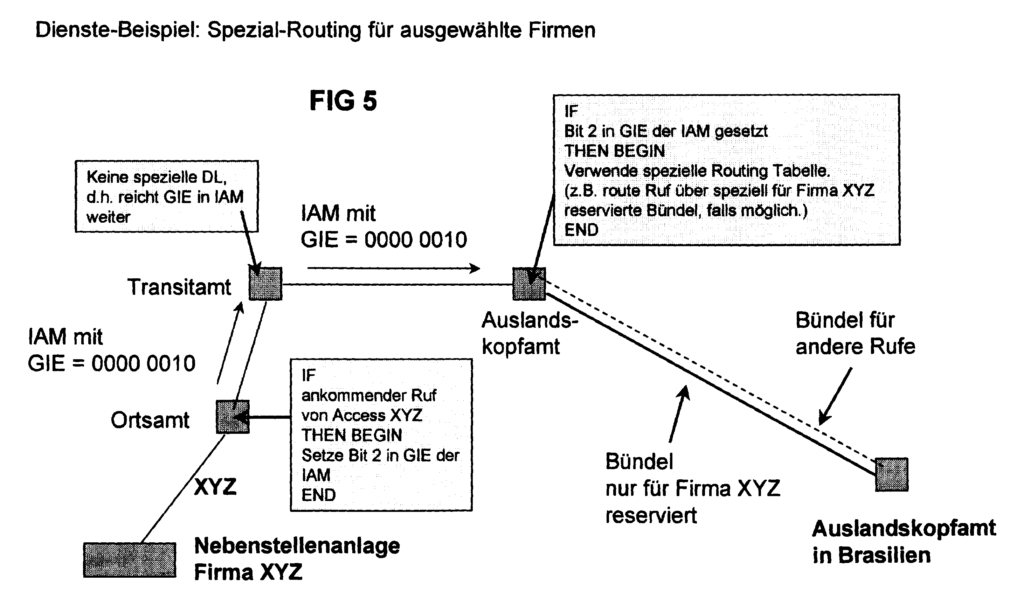

Beispiele für Ausprägungen von Manipulatorfunktionen sind beschrieben durch:
- Wenn Servicecode 0144 gewählt wird, setze Bit #1 im GIE der IAM-Nachricht für diesen Ruf (Schreibfunktion) und verwende Tarif T (siehe Dienste-Beispiel in FIG 1 bis FIG 3).
- Wenn Bit #1 im GIE der IAM Nachricht eines Rufes gesetzt ist (Lesefunktion), belege nur Direktwege und verwende dabei Leitungsreservierungsparameter TR=10 (siehe Dienste-Beispiel in FIG 1 bis FIG 3).
- Wenn ein Ruf über Bündel mit Kennung W eintrifft und Bit #1 im GIE der IAM gesetzt ist, löse den Ruf aus und setze Bit #1 im GIE der Release Message (siehe Fig. 4).
- Wenn ein Ruf über Access der Firma XYZ eintrifft, setze Bit #2 im GIE der IAM für diesen Ruf ( siehe Fig. 5).

Durch die an der Realisierung eines Dienstes beteiligten Manipulatorfunktionen (und die darin verwendeten Bitstellen) ist implizit festgelegt, für welchen Dienst bzw. welches Leistungsmerkmal eine bestimmte Bitstelle verwendet wird. Das gesamte GIE kann auf diese Weise für mehrere Dienste und/oder Leistungsmerkmale verwendet werden.

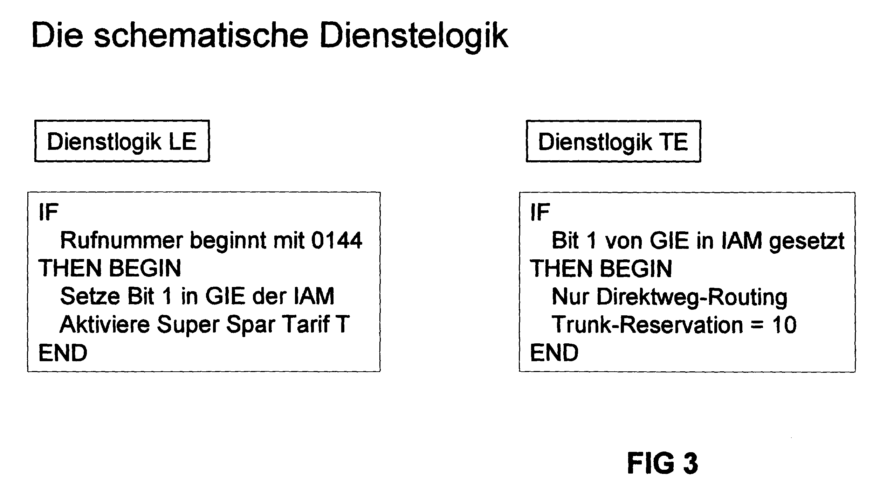

Die genannten Manipulatorfunktionen sind durch den Netzbetreiber z.B. über eine Programmiersprache benutzerfreundlich administrierbar (siehe z.B. Beispiel in FIG 3). Dieser kann dadurch neue Dienste und/oder Leistungsmerkmale im Netz realisieren, ohne daß diese durch den Hersteller der Vermittlungsstellen bereits vorgeleistet sein müssen.

Durch die Administrierbarkeit der genannten Manipulatorfunktionen in einer Vermittlungsstelle wird es somit ermöglicht
a) Informationen in der Zwischenamtssignalisierung in einer VST abhängig von Zustandsbedingungen der VST und der jeweiligen Verbindung flexibel in generischen Informationselementen einschreiben zu lassen und
b) Informationen aus generischen Informationselementen der Zwischenamtssignalisierung in einer VST auszuwerten und abhängig von Zustandsbedingungen der VST und der jeweiligen Verbindung flexibel mit Aktionen zu verknüpfen.

Ein mit der Erfindung bsph. realisierbarer Dienst "Super Spar Tarif" ist in den Figuren 1-3 dargestellt. Durch Vorwählen der Dienstkennung 0144 wird ein Fernruf nur über den kostengünstigsten Weg geführt. Die Blockierungswahrscheinlichkeit ist dadurch höher als für andere Rufe. Ein hoher Trunk-Reservierungsparameter sorgt zusätzlich dafür, daß kein 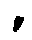 wertvollerer' Verkehr aus dem Netz verdrängt wird. Dafür werden 0144-Rufe andererseits nach einem günstigeren Tarif T vergebührt.

Weitere mit der Erfindung realisierbare Dienste bzw. LM sind in den Figuren 4 und 5 dargestellt.

Zusammenfassend kann nochmals folgendes gesagt werden:

Bei der vorliegenden Erfindung werden generische Informationselemente GIE eingesetzt, die flexibel neuen Leistungsmerkmalen zugeordnet werden können, d.h. es kann ohne APS-Wechsel für ein GIE administrativ festgelegt werden, für welche weiteren hinzukommenden neuen Dienste bzw. Leistungsmerkmale das GIE oder Teile des GIE (z.B. einzelne Bitstellen) verwendet wird. Dadurch wird erreicht, daß das Protokoll der Zwischenamtssignalisierung nicht geändert werden muß.

Durch die Erfindung wird die Realisierung einer Kategorie von Diensten möglich, die einen Informationsaustausch zwischen den Vermittlungstellen und eine Beeinflussung der Verbindungssteuerung durch die Vermittlungsstellen selbst erfordern.

Die Erfindung ermöglicht es, die Verbindungssteuerung einer VST ohne Wechsel des APS, d.h. während des Betriebs der VST zu beeinflussen und dadurch neue verbindungsbezogene Dienste bzw. Leistungsmerkmale einzubringen.

### Abkürzungen:

- APS:: Anlagenprogrammsystem
- CdPA:: Called Party Address
- DL :: Dienstelogik
- GIE:: Generisches Informationselement
- IAM:: Initial Address Message
- ISUP:: ISDN User Part
- LE :: Orts-VST
- LM :: Leistungsmerkmal
- TE :: Transit-VST
- VST:: Vermittlungsstelle

## Patentansprüche

1. Informationselement-Komponente einer Signalisierungs-Nachricht, die für die Signalisierung zwischen Vermittlungsstellen eines Kommunikationsnetzes verwendet wird,
**dadurch gekennzeichnet**, daß
sie derart ausgebildet ist, daß
- die Festlegung, für welche Dienste bzw. Leistungsmerkmale sie verwendet wird, während des Betriebs mittels einer entsprechenden Administrations-Komponente durchgeführt werden kann,
- deren Inhaltswerte entsprechend einer über die Administrations-Komponente erfolgten Vorgabe im Rahmen der Bearbeitung einer Verbindung von einer Vermittlungsstelle ausgewertet und/oder verändert werden können.

2. Informationselement-Komponente nach Anspruch 1,
**dadurch gekennzeichnet**, daß
die Administrations-Komponente die genannte Festlegung durchführt, indem sie für die Realisierung eines Dienstes bzw. Leistungsmerkmales jeweils die Information mindestens einer Bitstelle eines Informationselementes als Steuerinformation in die Verbindungssteuerung einer Vermittlungsstelle einbettet.

3. Verfahren zur Verbindungssteuerung in einem Kommunikationsnetz, demgemäß
in Signalisierungs-Nachrichten zwischen den Vermittlungsstellen Informationselemente verwendet werden, bei denen die Festlegung, für welche Dienste und/oder Leistungsmerkmale ein Informationselement verwendet wird, während des Betriebs administrativ durchgeführt werden kann, und bei denen die Inhaltswerte des Informationselementes entsprechend einer administrativen Vorgabe im Rahmen der Bearbeitung einer Verbindung von der Vermittlungsstelle verändert werden können.

4. Verfahren nach Anspruch 3,
**dadurch gekennzeichnet**, daß
die genannte Festlegung durchgeführt wird, indem für die Realisierung eines Dienstes bzw. Leistungsmerkmales jeweils die Information mindestens einer Bitstelle eines Informationselementes als Steuerinformation für die Verbindungssteuerung einer Vermittlungsstelle vorgegeben wird.

5. Administrations-Komponente, über die der Verbindungssteuerung einer Vermittlungsstelle während des Betriebs aufgeprägt werden kann, für welche Dienste und/oder Leistungsmerkmale ein Informationselement einer Signalisierungs-Nachricht verwendet wird.

6. Administrations-Komponente, über die der Netz-Betreiber in die Verbindungssteuerung an vorgegebenen Stellen Funktionen einbetten kann, durch die Inhaltswerte von Informationselementen von Signalisierungsnachrichten verändert und/oder ausgewertet werden können.

7. Verfahren zur Verbindungssteuerung in einer Vermittlungsstelle, demgemäß
der Verbindungssteuerung an bestimmten (Ablauf-)Stellen administrativ (Manipulator-)Funktionen aufgeprägt werden können, **dadurch gekennzeichnet**, daß
durch die (Manipulator-)Funktionen Aktionen veranlaßt werden können, durch die Inhaltswerte von Informationselementen von Signalisierungsnachrichten verändert und/oder ausgewertet werden können.

8. Vermittlungsstelle, mit
einer Manipulatorfunktion, die über eine Administrations-Komponente programmiert werden kann, wodurch die Verbindungssteuerung administrativ beeinflusst werden kann.
